# EUROPÄISCHE PATENTSCHRIFT

(11) **EP 1 385 902 B1**
(45) Veröffentlichungstag und Bekanntmachung des Hinweises auf die Patenterteilung: **01.07.2009**
(21) Anmeldenummer: 02726232.8
(22) Anmeldetag: 28.03.2002
(51) Int. Cl.: C08J 9/12, C08J 9/00, C08L 25/06

(54) **VERFAHREN ZUR HERSTELLUNG VON SCHAUMSTOFFPLATTEN**
METHOD OF PRODUCING FOAM SLABS
PROCEDE POUR LA PRODUCTION DE PLAQUES DE MOUSSE

(30) Priorität: 04.04.2001 DE 10116841
(43) Veröffentlichungstag der Anmeldung: 04.02.2004
(73) Patentinhaber: BASF SE, 67056 Ludwigshafen (DE)
(72) Erfinder: DIETZEN, Franz-Josef, 67454 Hassloch (DE); EHRMANN, Gerd, 67146 Deidesheim (DE); TURZNIK, Gerhard, 67269 Grünstadt (DE); ALICKE, Gerhard, 67549 Worms (DE); HAHN, Klaus, 67281 Kirchheim (DE); SCHLICHTMANN, Rainer, 67067 Ludwigshafen (DE); BOY, Elmar, 67433 Neustadt (DE)
(86) Internationale Anmeldenummer: PCT/EP2002/003524
(87) Internationale Veröffentlichungsnummer: WO 2002/081555

(56) Entgegenhaltungen:
- EP-A- 0 464 581
- EP-A- 0 863 175

## Beschreibung

Die Erfindung betrifft ein Verfahren zur Herstellung von Schaumstoffplatten mit einer Dichte von 20 bis 200 g-1⁻¹ und einem Querschnitt von mindestens 50 cm² durch Extrudieren und Verschäumen eines Styrolpolymerisats und 3 bis 15 Gew.-% einer Treibmittelmischung am CO₂, Ethanol und einem C₃-C₅-Kohlenwasserstoff.

Extrudierte Polystyrol-Schaumstoffe (XPS) werden in großem Maß zum Isolieren von Gebäuden und Gebäudeteilen eingesetzt. Für diesen Anwendungszweck müssen die-Schaumstoffplatten eine möglichst niedrige Wärmeleitfähigkeit aufweisen. Neuerdings werden aus Umweltschutzgründen zur Herstellung von XPS-Platten halogenfreie Treibmittel, vorzugsweise CO₂-haltige Treibmittelgemische eingesetzt. CO₂ diffundiert aber wesentlich rascher als fluorhaltige Gase aus den Schaumstoffzellen heraus und wird durch Luft ersetzt. Aus diesem Grund ist die Wärmeleitfähigkeit von XPS-Platten, die mit CO₂-haltigen Treibmitteln hergestellt wurden, etwas höher als die von XPS-Platten, die mit Fluorkohlenwasserstoffen hergestellt wurden. Aus der EP-A 863 175 ist bekannt, daß durch Zusatz von Graphitpartikeln bei der XPS-Herstellung die Wärmeleitfähigkeit reduziert werden kann. Es hat sich jedoch gezeigt, daß dabei aufgrund der nucleierenden Wirkung des Graphits ein sehr feinzelliger Schaum entsteht, was dazu führt, daß keine dikken Platten erhalten werden können. Das bevorzugt verwendete Treibmittelgemisch besteht aus CO₂ und Ethanol, es kann gegebenenfalls bis zu 30 Gew.-%, vorzugsweise bis zu 10 Gew.-% eines aliphatischen C₃-C₆-Kohlenwasserstoffs enthalten.

Es wurde nun gefunden, daß bei Verwendung eines Treibmittelgemisches, das CO₂ und Ethanol sowie 11 bis 22 Gew.-% eines gesättigten oder ungesättigten, aliphatischen C₃-C₅-Kohlenwasserstoffs, vorzugsweise Isobutan enthält, Schaumstoffplatten mit einer besonders niedrigen Wärmeleitfähigkeit erhalten werden. Bei Isobutan-Mengen von 10 Gew-% oder weniger erhält man keine wesentliche Erniedrigung der Wärmeleitfähigkeit, bei zu hohen Isobutan-Mengen sind die Schaumstoffplatten brennbar, sie bestehen den B2-Brandtest nach DIN 4102 nicht.

Die WO 96/34038 beschreibt offenzellige, mikrozelluläre Polystyrol-Schaumstoffplatten. Eine Vielzahl von geeigneten Treibmitteln ist beschrieben, u.a. auch CO₂, Ethanol und Isobutan. Entsprechende Mischungen sind jedoch nicht erwähnt, auch nicht der Effekt bezüglich der Wärmeleitfähigkeit, der bei Zusatz von C₃-C₅-Kohlenwasserstoffen auftritt. Ähnliches trifft auch auf die EP-A 464 581 zu, in der Treibmittelmischungen aus 3-70 Gew.-% eines Alkohols, 5-60 Gew.-% CO₂ und 0-90 Gew.-% eines C₃-C₅-Kohlenwasserstoffs und/oder eines Fluorkohlenwasserstoffs beschrieben sind.

Gegenstand der Erfindung ist ein Verfahren zur Herstellung von Schaumstoffplatten mit einer Dichte von 20 bis 200 g.l⁻¹ und einem Querschnitt von mindestens 50 cm² durch Extrudieren und Verschäumen eines Styrolpolymerisats und 3 bis 15 Gew.-%, vorzugsweise 4 bis 12 Gew.-%, bezogen auf das Styrolpolymerisat, einer Treibmittelmischung aus
- 79 bis 28 Gew.-% CO₂,
- 50 bis 10 Gew.-% Ethanol,
- 11 bis 22 Gew.-% eines gesättigten oder ungesättigten, aliphatischen C₃-C₅-Kohlenwasserstoffs und
- 0 bis 20 Gew.-% Wasser, wobei die Prozentzahlen sich auf 100 addieren.

Styrolpolymerisate im Sinne dieser Erfindung sind Polystyrol und Mischpolymerisate des Styrols, die mindestens 50 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-vinylverbindungen wie vinylcarbazol, Maleinsäureanhydrid oder auch geringe Mengen an Verbindungen, die zwei polymerisierbare Doppelverbindungen enthalten wie Butadien, Divinylbenzol oder Butandioldiacrylat.

Ein bevorzugtes Treibmittelgemisch besteht aus
- 60 bis 30 Gew.-% CO₂
- 50 bis 20 Gew.-% Ethanol
- 12 bis 18 Gew.-% Isobutan und
- 0 bis 20 Gew.-% Wasser,
wobei die Prozentzahlen sich auf 100 addieren.

Bevorzugt wir die Extrusion in Gegenwart von 0,01 bis 10 Gew.-%, bezogen auf das Styrolpolymerisat, eines partikelförmigen IR-Absorbern durchgeführt. Geeignete IR-Absorber sind Ruß, Metallpulver, z. B. Aluminiumpulver und Titandioxid; bevorzugt ist Graphit mit einer Partikelgröße von 1 bis 100 µm, in Mengen von 0,02 bis 4 Gew.-%.

Zweckmäßigerweise werden bei dem erfindungsgemäßen Verfahren Flammschutzmittel zugesetzt, vorzugsweise 0,5 bis 5 Gew.-% organische Bromverbindungen mit einem Bromgehalt von mehr als 70 %, wie z.B. Hexabromcyclododecan, vorzugsweise zusammen mit 0,1 bis 0,5 Gew.-% einer C-C- oder O-O-labilen organischen Verbindung, wie Dicumylperoxid oder bevorzugt Dicumyl.

Als weitere übliche Zusatz- und/oder Hilfsstoffe können der Polystyrolmatrix Antistatika, Stabilisatoren, Farbstoffe, Füllstoffe und/oder Keimbildner in üblichen Mengen zugesetzt werden.

Mit dem erfindungsgemäßen Verfahren lassen sich Schaumstoffplatten mit einer Dichte von 20 bis 200 g.l⁻¹, insbesondere von 25 bis 40 g.l⁻¹ herstellen, die eine Wärmeleitfähigkeit (λ-Wert) nach DIN 52612 bei 10°C von weniger als 35 mW.m⁻¹.K⁻¹ aufweisen. Bei Verwendung von Isobutan im Treibmittelgemisch läßt sich der λ-Wert unter 33.8 m.W.m⁻¹.K⁻¹ drücken, wodurch die Wärmeleitklasse 035 erreicht wird; wenn zusätzlich noch Graphit zugesetzt wird, erhält man sogar λ-Werte unter 32 m.W.m⁻¹.K⁻¹, wobei Plattendicken oberhalb von 60 mm, vorzugsweise von 80 mm und mehr erreichbar sind. Die Schaumstoffplatten bestehen den Brandtest B2 nach DIN 4102. Der Schaum ist vorzugsweise geschlossenzellig, die mittlere Zellgröße liegt oberhalb von 80 µm.

Die in den Beispielen genannten Prozente beziehen sich auf das Gewicht des eingesetzten Polystyrols.

### Beispiele

Die Schaumstoffproben wurden auf einer Tandemanlage extrudiert. Diese besteht aus einem ersten Extruder zum Aufschmelzen des Polymeren und zum Einmischen des Treibmittes und einem zweiten Extruder zum Kühlen der treibmittelhaltigen Schmelze. Polystyrol, 1,4 % Hexabromcyclododecan und 0,2 % Dicumyl wurden dem ersten Extruder zugeführt. Das Polymere wurde bei 210°C aufgeschmolzen und die Mischung der Treibmittel wurde gemeinsam an einem Punkt eingespritzt. Die treibmittelhaltige Schmelze wurde dann im zweiten Extruder auf die zum Schäumen notwendige Temperatur von 120-135°C abgekühlt. Der Durchsatz betrug 70 kg/h, die Düse hatte eine Breite von 70 mm und 2 mm Düsenspalthöhe. Bei den Versuchen 6 bis 9 wurde Graphitpulver (AF spez. 96 bis 97, mittlere Teilchengröße 6 µm, der Fa. Graphitwerk Kropfmühle) zugegeben. Treibmittelzusammensetzung und Ergebnis siehe Tabellen.

**Tabelle 1:**

| Nr | CO₂ (%) | Ethanol (%) | Iso-Butan (%) | (%) Iso-Butan im Treibmittelgemisch | Dichte (g/l) | λ (mW/mK) | B2 bestanden |
|---|---|---|---|---|---|---|---|
| 1 | 3,5 | 2,1 | | 0 | 36 | 36,4 | ja |
| 2 | 3,0 | 2,0 | 0,55 | 10 | 35 | 35,3 | ja |
| 3 | 2,9 | 2,0 | 0,80 | 14 | 33 | 33,6 | ja |
| 4 | 2,75 | 1,8 | 1,00 | 18 | 32,5 | 33,3 | ja |
| 5 | 2,25 | 1,6 | 1,65 | 30 | 33,5 | 32,6 | nein |

| | | | | | | | |
|---|---|---|---|---|---|---|---|
| Versuch 1,2 und 5 sind nicht erfindungsgemäß; Plattendicken 80 mm | | | | | | | |

**Tabelle 2:**

| Nr | CO₂ (%) | Ethanol (%) | Iso-Butan (%) | Graphit (%) | Plattendicke (mm) | Dichte (g/l) | λ (mW/mK) | B2 bestanden |
|---|---|---|---|---|---|---|---|---|
| 6 | 3,5 | 2,1 | | 0,7 | 60 | 38 | 33,1 | ja |
| 7 | 3,5 | 2,1 | | 0,7 | 80 | | nicht herstellbar | |
| 8 | 2,9 | 2,0 | 0,8 | 0,7 | 60 | 34 | 31,2 | ja |
| 9 | 2,9 | 2,0 | 0,8 | 0,7 | 80 | 34 | 31,9 | ja |
| 10 | 2,9 | 2,0 | 0,8 | 0,05 | 80 | 33 | 33,0 | ja |
| 11 | 2,9 | 2,0 | 0,8 | - | 80 | 33 | 33,6 | ja |

| | | | | | | | | |
|---|---|---|---|---|---|---|---|---|
| Versuch 6 und 7 sind nicht erfindungsgemäß; | | | | | | | | |

**Tabelle 3:**

| Versuch | CO₂ (%) | Ethanol (%) | Propan | Iso-Pentan | Dichte (g/l) | λ (mW/mK) | B2 bestanden |
|---|---|---|---|---|---|---|---|
| 12 | 3,5 | 2,1 | | | 36 | 36,4 | ja |
| 13 | 3,0 | 2,0 | 0,55 | | 36 | 35,4 | ja |
| 14 | 2,9 | 2,0 | 0,8 | | 34 | 34,0 | ja |
| 15 | 2,0 | 1,5 | 1,5 | | 36 | 33,1 | nein |
| 16 | 3,0 | 2,0 | | 0,55 | 35 | 35,5 | ja |
| 17 | 2,9 | 2,0 | | 0,80 | 35 | 34,4 | ja |
| 18 | 2,4 | 1,8 | | 1,8 | 35 | 33,3 | nein |

| | | | | | | | |
|---|---|---|---|---|---|---|---|
| Versuch 14 und 17 sind erfindungsgemäß, Plattendicken 80 mm | | | | | | | |

## Patentansprüche

1. Verfahren zur Herstellung von Schaumstoffplatten mit einer Dichte vom 20 bis 200 g·l⁻¹ und einem Querschnitt von mindestens 50 cm² durch Extrudieren und Verschäumen eines Styrolpolymerisats, und 3 bis 15 Gew.-%, bezogen auf das Styrolpolymerisat, einer Treibmittelmischung aus CO₂, Ethanol und einem aliphatischen Kohlenwasserstoff, **dadurch gekennzeichnet, daß** die Treibmittelmischung besteht aus:
- 79 bis 28 Gew.-% CO₂,
- 50 bis 10 Gew.-% Ethanol,
- 11 bis 22 Gew.-% eines gesättigten oder ungesättigten, aliphatischen C₃-C₅-Kohlenwasserstoffs und
- 0 bis 20 Gew.-% Wasser,
wobei die Prozentzahlen sich auf 100 addieren.

2. Verfahren nach Anspruch 1, **dadurch gekennzeichnet, daß** der Kohlenwasserstoff Isobutan ist.

3. Verfahren nach Anspruch 1, **dadurch gekennzeichnet, daß** es in Gegenwart von 0,01 bis 10 Gew.-%, bezogen auf das Styrolpolymerisat, eines partikelförmigen IR-Absorbers durchgeführt wird.

4. Verfahren nach Anspruch 3, **dadurch gekennzeichnet, daß** der IR-Absorber Graphit mit einer Partikelgröße von 1 bis 100 µm ist.

5. Verfahren nach Anspruch 1, **dadurch gekennzeichnet, daß** Schaumstoffplatten einer Dicke von mehr als 60 mm hergestellt werden.

6. Verfahren nach Anspruch 1, **dadurch gekennzeichnet, daß** der Schaumstoff geschlossenzellig ist.

## Claims

1. A process for producing foam sheets with a density of from 20 to 200 g·1⁻¹ and with a cross section of at least 50 cm² by extruding and foaming a styrene polymer and from 3 to 15% by weight, based on the styrene polymer, of a blowing agent mixture of CO₂, ethanol, and an aliphatic hydrocarbon, which comprises using a blowing agent mixture composed of:
- from 79 to 28% by weight of CO₂,
- from 50 to 10% by weight of ethanol,
- from 11 to 22% by weight of a saturated or unsaturated, aliphatic C₃-C₅ hydrocarbon, and
- from 0 to 20% by weight of water,
where the percentages give a total of 100.

2. The process according to claim 1, wherein the hydrocarbon is isobutane.

3. The process according to claim 1, which is carried out in the presence of from 0.01 to 10% by weight, based on the styrene polymer, of a particulate IR absorber.

4. The process according to claim 3, wherein the IR absorber is graphite with a particle size of from 1 to 100 µm.

5. The process according to claim 1, wherein foam sheets are produced with a thickness of more than 60 mm.

6. The process according to claim 1, wherein the foam is a closed-cell foam.

## Revendications

1. Procédé pour la production de plaques de mousse ayant une densité de 20 à 200 g.1⁻¹ et une section transversale d'au moins 50 cm², par extrusion et transformation en mousse d'un polymère de styrène, et comportant de 3 à 15 % en poids, par rapport au polymère de styrène, d'une composition d'agent porogène à base de CO₂, d'éthanol et d'un hydrocarbure aliphatique, **caractérisé en ce que** la composition d'agent porogène est constituée de :
- 79 à 28 % en poids de CO₂,
- 50 à 10 % en poids d'éthanol,
- 11 à 22 % en poids d'un hydrocarbure aliphatique en C₃-C₅, saturé ou insaturé et
- 0 à 20 % en poids d'eau,
la somme des pourcentages étant égale à 100.

2. Procédé selon la revendication 1, **caractérisé en ce que** l'hydrocarbure est l'isobutène.

3. Procédé selon la revendication 1, **caractérisé en ce qu'**il est effectué en présence de 0,01 à 10 % en poids, par rapport au polymère de styrène, d'un absorbeur IR particulaire.

4. Procédé selon la revendication 3, **caractérisé en ce que** l'absorbeur IR consiste en graphite ayant une taille de particule de 1 à 100 µm.

5. Procédé selon la revendication 1, **caractérisé en ce qu'**on produit des plaques de mousse ayant une épaisseur de plus de 60 mm.

6. Procédé selon la revendication 1, **caractérisé en ce que** la mousse est à cellules fermées.
